(19) **Europäisches Patentamt**

**European Patent Office**

**Office européen des brevets**

(11) **EP 1 536 986 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
***B60R 21/01*** *(2006.01)*

(21) Anmeldenummer: **03720198.5**

(86) Internationale Anmeldenummer:
**PCT/DE2003/000873**

(22) Anmeldetag: **18.03.2003**

(87) Internationale Veröffentlichungsnummer:
**WO 2004/020253 (11.03.2004 Gazette 2004/11)**

(54) **VORRICHTUNG ZUR ERKENNUNG EINES FAHRZEUG BERSCHLAGS**

DEVICE FOR RECOGNIZING A VEHICLE OVERTURN

DISPOSITIF POUR IDENTIFIER UN TONNEAU EFFECTUE PAR UN VEHICULE

(84) Benannte Vertragsstaaten:
**DE FR GB**

(30) Priorität: **28.08.2002 DE 10239406**

(43) Veröffentlichungstag der Anmeldung:
**08.06.2005 Patentblatt 2005/23**

(73) Patentinhaber: **ROBERT BOSCH GMBH**
**70442 Stuttgart (DE)**

(72) Erfinder:
• **KROENINGER, Mario**
**77815 Buehl (DE)**
• **SCHMID, Michael**
**70806 Kornwestheim (DE)**
• **LAHMANN, Robert**
**70174 Stuttgart (DE)**

(56) Entgegenhaltungen:
**EP-A- 1 101 658      US-B1- 6 438 463**

EP 1 536 986 B1

**Beschreibung**

Stand der Technik

Die Erfindung geht aus von einer Vorrichtung zur Erkennung eines Fahrzeugsüberschlags nach der Gattung des unabhängigen Patentanspruchs.

Aus der Offenlegungsschrift DE 199 10 596 A1 ist es bereits bekannt, Rückhaltemittel in Abhängigkeit von Fahrzeugdynamikdaten auszulösen. Dabei können insbesondere solche Daten von einem ESP-System verwendet werden.

US 6438463B1 betrifft eine vorrichtung zur Erkennung eines Fahrzeugüberschlags nach dem oberbegriff des Anspruchs 1.

Aus der nicht vorveröffentlichten Deutschen Patentanmeldung DE 101 49 112 ist ein Verfahren zur Bestimmung einer Auslöseentscheidung für Rückhaltemittel in einem Fahrzeug bekannt, das in Abhängigkeit von einem Schwimmwinkel, einer Fahrzeugquergeschwindigkeit und dem Fahrzeugkippwinkel eine Auslöseentscheidung trifft. Der maximal erreichbare Fahrzeugkippwinkel wird durch eine Fahrzeugquerbeschleunigung und/oder eine Fahrzeugquergeschwindigkeit charakterisiert. Zusätzlich kann noch eine Insassenerkennung verwendet werden.

Vorteile der Erfindung

Die erfindungsgemäße Vorrichtung zur Erkennung eines Fahrzeugüberschlags mit den Merkmalen des unabhängigen Patentanspruchs hat demgegenüber den Vorteil, dass durch die Aufteilung des Fahrzustands in zeitlich aufeinander folgende Phasen eine entsprechende Bestimmung des Schwimmwinkels für die einzelnen Phasen möglich ist. D.h. für jede Phase wird eine gesonderte Berechnungsvorschrift für den Schwimmwinkel verwendet. Dies ermöglicht insbesondere dann eine Bestimmung des Schwimmwinkels im Winkelbereich von größer als 10°. Auch die laterale Geschwindigkeit wird dabei bestimmt. Damit kann im Zusammenspiel mit der Überschlagssensorik (Drehrate um die Längsachse $\omega_x$, der Fahrzeugquerbeschleunigung $a_y$ und optional der Fahrzeugvertikalbeschleunigung $a_z$) bei Fahrzeugüberschlägen mit hoher lateraler Beschleunigung eine sichere Auslöseentscheidung schon bei sehr kleinen Wankwinkeln gefällt werden, was verglichen mit herkömmlichen Systemen einen erheblich verbesserten Insassenschutz ermöglicht. Dies rührt daher, dass die laterale Geschwindigkeit und damit implizit der Schwimmwinkel den Überschlag im Falle eines Soiltrips entscheidend beeinflußt. Der Schwimmwinkel und die laterale Geschwindigkeit sollen im Folgenden durch eine mehrstufige Logik bestimmt werden. Dazu werden verschiedene Berechnungsverfahren kombiniert und eine Realisierung der Auswahl des jeweiligen Verfahrens angegeben. Die Anordnung ist dabei durch eine Erfassung der Längsgeschwindigkeit, der Gierrate, d.h. der Drehrate um die Hochachse des Fahrzeugs, der lateralen Beschleunigung und optional den Raddrehzahlen der Längsbeschleunigung, des Lenkwinkels und einer Schätzung des Schwimmwinkels gekennzeichnet.

Der Fahrzustand eines Fahrzeugs kann im Sinne der Anmeldung in drei Kategorien eingeteilt werden, die ein Fahrzeug bei einem Schleudervorgang nacheinander durchläuft. Es sind also zeitlich aufeinander folgende Phasen. Es kann aber auch ein Wechsel von einer fortgeschrittenen Phase zurück in einen vorherigen Zustand erfolgen. Das sind hier insbesondere der stabile Fahrzustand, eine Schleuderbewegung, die auch als Ausbrechzustand bezeichnet werden kann, und das Schleudern bzw. der Schleuderzustand selbst.

Weitere vorteilhafte Gestaltungen der erfindungsgemäßen Vorrichtung sind in den abhängigen Ansprüchen aufgeführt.

Insbesondere ist es von Vorteil, dass der stabile Fahrzustand durch einen kleinen und im Sinne der Überschlagserkennung nahezu konstanten Schwimmwinkel, die Schleuderbewegung durch eine große Schwimmwinkeländerung und das Schleudern durch einen Schwimmwinkel, der einen vorgegebener Schwellwert überschreitet, gekennzeichnet sind. Dies ermöglicht die Identifikation dieser Phasen, um die entsprechende Berechnungsvorschrift für den Schwimmwinkel auszuwählen.

Wie oben dargestellt, ist es möglich, dass die Sensorik nicht nur gemessene und geschätzte bzw. berechnete Fahrdynamikdaten wie die Fahrzeuglängsgeschwindigkeit, die Gierrate und eine Fahrzeugquerbeschleunigung bestimmt, sondern auch weitere berechnete oder gemessene Größen auswertet, wie die Raddrehzahlen, die Beschleunigung in Fahrzeuglängsrichtung, den Lenkwinkel und einen Schwimmwinkel, der beispielsweise durch ein Steuergerät zur Fahrdynamikregelung ermittelt wurde. Dieser Wert hat bei den heutigen Systemen zur Fahrdynamikregelung jedoch nur für kleine Schwimmwinkel Gültigkeit, da nur für Schwimmwinkel von wenigen Grad eine erfolgreiche Einflussnahme auf den Fahrzustand möglich ist und deshalb auch nur dieser Bereich betätigt werden muss. Außerdem kann auch ein Gerät zur Messung des Schwimmwinkels und/oder der Fahrzeugquergeschwindigkeit verwendet werden.

Schließlich ist es auch von Vorteil, dass die erfindungsgemäße Vorrichtung mit einem Rückhaltesystem verbindbar ist, welches der Prozessor der Vorrichtung in Abhängigkeit von der Erkennung eines Überschlags ansteuert. Damit wird insbesondere erfindungsgemäß die Auslösung von solchen Rückhaltemitteln durch die erfindungsgemäße Verwendung des Schwimmwinkels β und der Fahrzeuglateralgeschwindigkeit $v_y$ zusätzlich zur Überschlagssensorik ($\omega_x$, $a_y$ und $a_z$) genauer und situationsangepasster.

Zeichnung

Ausführungsbeispiele der Erfindung sind in der Zeichnung dargestellt und werden in der nachfolgenden Beschreibung näher erläutert.

Es zeigen

Figur 1    ein Blockschaltbild der erfmdungsgemäßen Vorrichtung,
Figur 2    ein Flussdiagramm des Ablaufs, den die erfindungsgemäße Vorrichtung durchläuft,
Figur 3    ein Zustandsdiagramm für den Ablauf der erfindungsgemäßen Vorrichtung,
Figur 4    ein Blockdiagramm zur Angabe der für den stabilen Fahrzustand charakteristischen Parameter,
Figur 5    ein zweites Blockdiagramm zur Charakterisierung des stabilen Fahrzustands,
Figur 6    ein erstes Blockdiagramm zur Charakterisierung des Ausbrechzustands,
Figur 7    ein zweites Blockdiagramm zur Charakterisierung des Ausbrechzustands,
Figur 8    ein erstes Blockdiagramm zur Charakterisierung des Schleuderzustands und
Figur 9    ein zweites Blockdiagramm zur Charakterisierung des Schleuderzustands.

Beschreibung

Moderne Fahrzeuge sind mit Rückhaltemitteln ausgestattet, wie zum Beispiel einem Fensterairbag oder Gurtstraffer, die einen Schutz der Insassen bei einem Fahrzeugüberschlag ermöglichen. Bisherige Systeme zur Überschlagserkennung betrachten die Wankbewegung und die Beschleunigungen in x-, y- und z-Richtung des Fahrzeugs. Auf dieser Basis ist eine sichere Erkennung eines Fahrzeugüberschlags möglich. Die Entscheidung kann jedoch erst zu einem späten Zeitpunkt des Überschlags sicher getroffen werden, der typischer Weise bei einem Wankwinkel von 20 bis 40 Grad liegt. Bei bestimmten Fällen von Fahrzeugüberschlägen, den sogenannten Soil-Trips ist dies aber zu spät, um den Insassen hinreichend zu schützen, da er durch eine hohe laterale Beschleunigung bereits eine Seitwärtsverlagerung erfahren hat, die den Nutzen von beispielsweise Fensterairbags stark einschränkt. Wie im Stand der Technik angegeben ist bereits ein Verfahren bekannt, das eine rechtzeitige Auslöseentscheidung bei hoher lateraler Beschleunigung ermöglicht, indem es den Schwimmwinkel und die laterale Beschleunigung des Fahrzeugs mit einbezieht.

Für die Bestimmung des Schwimmwinkels im Winkelbereich größer als 20° und der lateralen Geschwindigkeit, wie sie für die Überschlagserkennung genutzt werden sollen, wird erfindungsgemäß eine Vorrichtung vorgeschlagen, die den Fahrzustand eines Fahrzeugs in zeitlich aufeinander folgende Phasen einteilt, wobei für jede Phase eine Bestimmung des Schwimmwinkels und der Fahrzeugquergeschwindigkeit aus den Fahrzeugdynamikdaten erfolgt, wobei die Art der Bestimmung des Schwimmwinkels und der Fahrzeugquergeschwindigkeit in den einzelnen Phasen unterschiedlich ist.

Die Bestimmungsmethode, also beispielsweise eine Berechnungsmethode ist der jeweiligen Phase genau zugeordnet und nimmt auf die physikalischen Gegebenheiten dieser Phase Rücksicht. Es werden insbesondere drei Phasen unterschieden: der stabile Fahrzeugzustand, eine Schleuderbewegung, die auch als Ausbrechzustand bezeichnet wird, und das Schleudern an sich, also der Schleuderzustand.

Der Schwimmwinkel und die laterale Geschwindigkeit $v_y$ sollen im Folgenden durch eine mehrstufige Logik bestimmt werden. Dazu werden verschiedene Berechnungsverfahren kombiniert und eine Realisierung der Auswahl des jeweiligen Verfahrens angegeben.

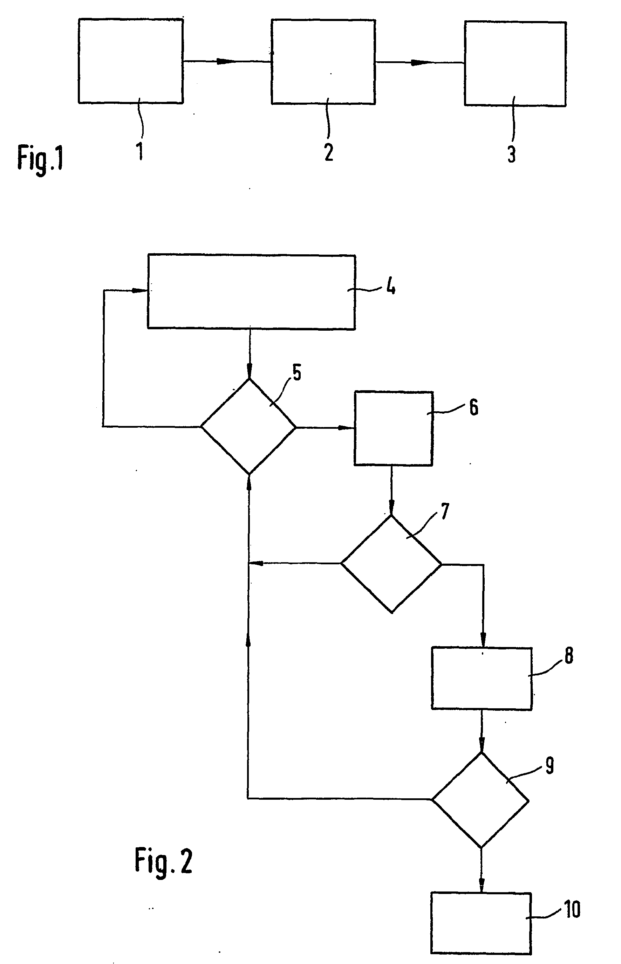

Figur 1 zeigt ein Blockschaltbild der erfindungsgemäßen Vorrichtung. Eine Sensorik 1 ist über einen Datenausgang mit einem Prozessor 2 verbunden. Der Prozessor 2, der auch Speichermittel aufweist, ist über einen Datenausgang mit einem Rückhaltesystem 3 verbunden. Die Sensorik 1 liefert Fahrdynamikdaten und Überschlagsdaten (Gierrate und horizontale Beschleunigungen). Dazu weist die Sensorik 1 Beschleunigungs- und Drehratensensoren auf. Auch die Erfassung der Raddrehzahl und des Lenkwinkels kann in der Sensorik 1 vorgesehen sein. Die Sensorik 1 kann im Fahrzeug verteilt sein und/oder in einem zentralen Steuergerät konzentriert sein. Die Sensorik 1 liefert hier bereits ein digitales Signal an den Prozessor 2. Allgemein werden digitale Sensoren verwendet, die bereits ein digitalisiertes Sensorsignal ausgeben.

Es ist möglich, analoge Sensoren zu verwenden, deren Signal entweder im Prozessor 2 oder durch einen besonderen Analog-Digital-Wandler digitalisiert wird. Die Digitalisierung ist für die weitere Verarbeitung notwendig. Die Sensorik 1 kann ebenfalls ein Steuergerät zur Fahrdynamikregelung umfassen, das einen Schätzwert für einen Schwimmwinkel bei kleinen Winkeln angeben kann. Solche Fahrdynamikregelungen sind in der Regel nur für Winkelbereiche unterhalb von 10° geeignet, wie zum Beispiel Verfahren, die ein Modell aus Reifencharakteristik und Seitenführungskraft verwenden. Die Fahrdynamikregelung kann insbesondere bei größeren Scliwimmwinkeln nicht mehr erfolgeich durchgeführt werden. Ebenso kann die Sensorik 1 ein Steuergerät aufweisen, das berechnete oder aufbereitete Größen liefert, wie z.B. die Fahrzeuglängsgeschwindigkeit.

Die Sensorik 1 kann also, wie oben angegeben, außerhalb eines Gehäuses, in dem sich der Prozessor 2 befindet, angeordnet sein. Die elektrische Verbindung zwischen der Sensorik 1 und dem Prozessor 2 kann dabei durch einen Bus oder durch eine Zweidrahtleitung oder eine Mehrzahl von Zweidrahtleitungen realisiert sein. Insbesondere bei den Zweidrahtleitungen ist es möglich, dass der Informationsfluss unidirektional von der Sensorik 1 zum Prozessor 2 festgelegt ist.

Der Prozessor 2 wertet zusätzlich zur herkömmlichen Überschlagssensorik ($\omega_x$, $a_y$ und $a_z$) die Fahrdynamikdaten der Sensorik 1 aus und kann daraus durch Ermittlung des Schwimmwinkels und der Fahrzeugquergeschwindigkeit einen Fahrzeugüberschlag erkennen. Der Schwimmwinkel und die Fahrzeugquerbeschleunigung werden hier nun in Abhängigkeit von der festgestellten Phase des Fahrzustands bestimmt. Für jede Phase ist eine gesonderte Berechnungsvorschrift vorgesehen. Hier sind insbesondere drei Phasen vorgesehen, und zwar der stabile Fahrzustand, ein Ausbrechzustand und der Schleuderzustand. Prinzipiell ist auch eine Unterteilung in mehr oder weniger als drei Phasen möglich.

Zunächst befindet sich das Fahrzeug im stabilen Fahrzustand, was Kurvenfahrten mit einem geringen Schwimmwinkel mit einbezieht. Liegt dieser Zustand vor, so sind der Schwimmwinkel und die laterale Geschwindigkeit für eine Überschlagserkennung nicht von Interesse, da sie zu gering sind, um eine Überschlagsbewegung einzuleiten. Als eine geschätzte laterale Geschwindigkeit $v_{y0}$ ergibt sich deshalb der Wert von Null. Der geschätzte Schwimmwinkel $\beta_0$ kann in dieser Phase für die Überschlagserkennung als konstant betrachtet werden, wobei die Konstante fahrzeugabhängig ist und durch den maximal erreichbaren Schwimmwinkel bei Kurvenfahrten bestimmt ist. Als Variante ist es auch möglich, den Schwimmwinkel $\beta_{ESP}$, wie er beispielsweise in einem Steuergerät mit Hilfe von Reifencharakteristikmodellen berechnet wird, als Übergabewert für den nächsten Zustand zu nutzen. Eine weitere Variante ist es den Schwimmwinkel $\beta_0$, der beim Übergang in Phase 2 verwendet werden soll, durch eine Schätzung der Fahrsituation, beispielsweise auf Basis eines, gegebenenfalls geeignet gefilterten Lenkwinkels, der Gierrate und der Fahrzeugquerbeschleunigung zu bestimmen.

Die zweite Phase ist durch eine beginnende Schleuderbewegung gekennzeichnet. Diese kann beispielsweise an einer hohen Schwimmwinkeländerung oder einem starken Abfall einer zuvor länger anhaltenden lateralen Beschleunigung erkannt werden. Dies rührt daher, dass ein Schleudern unter anderem dann einsetzt, wenn die Seitführungskräfte bei einer Kurvenfahrt nicht mehr ausreichen, um das Fahrzeug stabil zu halten, und daher die Räder seitlich wegrutschen.

Die Schwimmwinkeländerung wird mit folgender Gleichung berechnet:

$$\dot{\beta} = \omega_z \frac{a_y \cos^2(\beta) + a_x \cos(\beta)\sin(\beta)}{v_x} \approx \omega_z - \frac{a_y}{v_x} \text{ für kleine } \beta$$

In dieser Phase kann der Schwimmwinkel $\beta_1$ durch Aufmtegration der Schwimmwinkeländerung bestimmt werden, wobei als Startwert der zuletzt ermittelte Wert $\beta_0$ aus der Phase 1 genommen wird. Dies wird dann nach folgender Gleichung bestimmt:

$$\beta_1 = \beta_0 + \int \dot{\beta} \, dt$$

Die laterale Geschwindigkeit $v_y$ ergibt sich dann durch den Schwimmwinkel $\beta_1$ und die Längsgeschwindigkeit $v_x$ des Fahrzeugs zu:

$$v_{y,1} = v_x \tan(\beta_1)$$

Die dritte Phase ist durch ein Schleudern des Fahrzeugs gekennzeichnet. Dies ist beispielsweise durch den Schwimmwinkel $\beta_1$ jenseits einer bestimmten Schwelle $\beta_{min}$ und/oder dem Blockieren der Räder bei einer Gierrate $\omega_z$ größer als einer Mindestgierrate $\omega_{zmin}$ erkennbar.

Der Schwimmwinkel $\beta_2$ wird nun durch Aufintegration der Gierrate berechnet werden, wobei als Startwert der

zuletzt ermittelte Wert $\beta_1$ aus der zweiten Phase genommen wird:

$$\beta_2 = \beta_1 + \int \omega_z dt$$

Die laterale Geschwindigkeit ergibt sich dann durch den Schwimmwinkel und die Schwerpunktsgeschwindigkeit $v_{sp}$ des Fahrzeugs:

$$v_{y,2} = v_{sp} \sin(\beta_2)$$

Die Schwerpunktsgeschwindigkeit ergibt sich dabei aus der anfänglichen Längsgeschwindigkeit, der anfänglichen lateralen Geschwindigkeit und der lateralen Beschleunigung $a_y$ und optional der Längsbeschleunigung $a_x$.

In Figur 2 ist in einem Flussdiagramm der Ablauf, der auf der erfindungsgemäßen Vorrichtung gemäß Figur 1 abläuft, visualisiert. In Verfahrensschritt 4 gibt die Sensorik 1 die Fahrdynamikdaten an den Prozessor 2 ab. In Verfahrensschritt 5 wird nun überprüft, ob der stabile Zustand verlassen wird, ob also eine Ausbrechsituation vorliegt. Dies prüft der Prozessor 2 anhand der Fahrdynamikdaten ab. Ist das nicht der Fall, wird zu Verfahrensschritt 4 zurück gesprungen. Ist das jedoch der Fall, dann ist in Verfahrensschritt 6 der Ausbrechzustand erkannt und der Schwimmwinkel wird, wie oben angegeben, bestimmt. Dies gilt auch für die Fahrzeugquergeschwindigkeit. In Verfahrensschritt 7 wird nun überprüft, ob Phase 3 d.h. der Schleuderzustand erreicht ist. Ist das nicht der Fall, wird zu Verfahrensschritt 5 zurückgesprungen. Ist das jedoch der Fall, dann wird zu Verfahrensschritt 8 gesprungen und wir befinden uns im erkannten Schleuderzustand, wobei nun der Schwimmwinkel und die Fahrzeugquergeschwindigkeit, wie oben angegeben, bestimmt wird. In Verfahrensschritt 9 wird nun überprüft, ob anhand der Fahrdynamikdaten und der Überschlagssensorik ($\omega_x$, $a_y$ und $a_z$) ein Fahrzeugüberschlag erkannt wurde. Ist das nicht der Fall, wird zu Verfahrensschritt 5 zurück gesprungen. Ist das jedoch der Fall, dann wird zu Verfahrensschritt 10 gesprungen und die Rückhaltemittel 3 werden durch den Prozessor 2 angesteuert. Beim Fahrzeugüberschlag sind dies beispielsweise Airbags, die insbesondere den Kopfbereich schützen, ein Überrollbügel und Gurtstraffer, die ein Hinausrutschen der Person, also den Submarining-Effekt, beim Überschlagen verhindern.

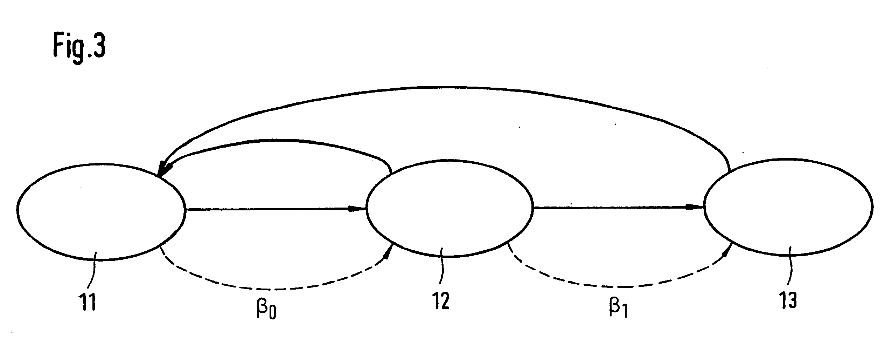

Figur 3 zeigt ein Zustandsdiagramm, welches vom erfindungsgemäßen Vorrichtung durchlaufen wird. Aus einem stabilen Fahrzustand 11 gelangt die Vorrichtung in den Ausbrechzustand 12, wenn, wie oben dargestellt, eine Ausbrecherkennung vorliegt. Als Übergabeparameter wird dabei der Schwimmwinkel $\beta_0$ übergeben. Im Ausbrechzustand 12 wird überprüft, ob auf einen stabilen Zustand erkannt wird oder ein Schleuderzustand vorliegt. Wurde ein stabiler Fahrzustand erkannt, dann wird vom Ausbrechzustand 12 in den stabilen Fahrzustand 11 zurückgesprungen. Wird jedoch ein Schleuderzustand erkannt, dann wird zum Zustand 13, dem Schleuderzustand, gesprungen und der Schwimmwinkel $\beta_1$ als Parameter übergeben.

Falls keines von beiden vorliegt wird im Ausbrechzustand 12 verweilt. Im Schleuderzustand wird nun überprüft, ob wieder der stabile Fahrzustand vorliegt. In diesem Fall wird vom Zustand 13 in den stabilen Fahrzustand 11 zurückgesprungen. Zusätzlich wird überprüft, ob die Rückhaltemittel auszulösen sind.

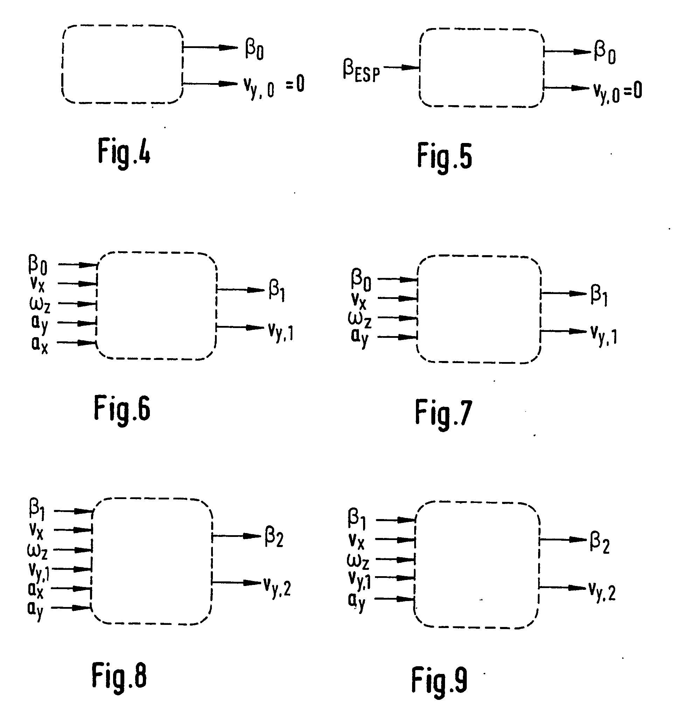

Figur 4 zeigt, dass als Ausgabeparameter des stabilen Fahrzustands der Schwimmwinkelschätzwert $\beta_0$ und eine Fahrzeugquergeschwindigkeit von Null vorliegen. Figur 5 stellt eine Variante dar, wenn von der Fahrdynamikregelung der Schwimmwinkel $\beta_{ESP}$ geliefert wird. Auch dann liegen als Ausgabewerte der Schwimmwinkel $\beta_0$ und die Fahrzeugquergeschwindigkeit von $v_y$ gleich Null vor.

Figur 6 zeigt, welche Parameter eingehen, um den Schwimmwinkel $\beta_1$ und die Fahrzeugquergeschwindigkeit $v_{y1}$ im Ausbrechzustand zu bestimmen. Dazu ist der Schwimmwinkel $\beta_0$ aus dem stabilen Fahrzustand, die Fahrzeuglängsgeschwindigkeit $v_x$, die Gierrate $\omega_z$, die Fahrzeugquerbeschleunigung $a_y$ und die Fahrzeuglängsbeschleunigung $a_x$ notwendig. Wie in Figur 7 gezeigt, ist es auch möglich, auf die Fahrzeuglängsbeschleunigung zu verzichten und lediglich den Schwimmwinkel $\beta_0$, die Fahrzeuglängsgeschwindigkeit $v_x$, die Gierrate $\omega_z$ und die Fahrzeugquerbeschleunigung $a_y$ zu verwenden, um den Schwimmwinkel $\beta_1$ und die Fahrzeugquergeschwindigkeit $v_{y1}$ zu bestimmen.

Figur 8 zeigt nun, welche Parameter für die Bestimmung des Schwimmwinkels $\beta_2$ und der Fahrzeugquergeschwindigkeit $v_{y2}$ im Schleuderzustand notwendig sind. Hier sind es der Schwimmwinkel $\beta_1$, die Fahrzeuglängsgeschwindigkeit $v_x$, die Gierrate $\omega_z$, die Fahrzeugquergeschwindigkeit $v_{y1}$, die Fahrzeuglängsbeschleunigung $a_x$ und die Fahrzeugquerbeschleunigung $a_y$. Wie in Figur 9 dargestellt, ist es alternativ möglich, auf die Fahrzeuglängsbeschleunigung zu verzichten.

**Patentansprüche**

1.  Vorrichtung zur Erkennung eines Fahrzeugüberschlags mit einer Sensorik (1) zur Erfassung von Fahrdynamikdaten und Überschlagsdaten ($v_x$, $\omega_z$, $a_y$, $a_x$, $\omega_x$, $\beta_{ESP}$), wobei die Sensorik (1) mit einem Prozessor (2) verbindbar ist, der derart konfiguriert ist, dass der Prozessor (2) in Abhängigkeit von den Fahrdynamikdaten und Überschlagsdaten ($v_x$, $\omega_z$, $a_y$, $a_x$, $\omega_x$, $\beta_{ESP}$) einen Fahrzeugüberschlag erkennt, **dadurch gekennzeichnet, dass** der Prozessor (2) Mittel zur Einteilung eines Fahrzustands des Fahrzeugs in zeitlich aufeinander folgende Phasen (11 bis 13) aufweist, wobei der Prozessor (2) für jede Phase Mittel zur Bestimmung eines Schwimmwinkels und einer Fahrzeugquergeschwindigkeit aus den Fahrdynamikdaten und Überschlagsdaten ($v_x$, $\omega_z$, $a_y$, $a_x$, $\omega_x$, $\beta_{ESP}$) aufweist, wobei die Erkennung des Fahrzeugüberschlags in Abhängigkeit von dem Schwimmwinkel ($\beta_0$, $\beta_1$, $\beta_2$) und der Fahrzeugquergeschwindigkeit ($v_{y0}$, $v_{y1}$, $v_{y2}$) erfolgt.

2.  Vorrichtung nach Anspruch 1, **dadurch gekennzeichnet, dass** die Mittel zur Einteilung des Fahrzustands zur Unterscheidung von drei Phasen konfiguriert sind: ein stabiler Fahrzustand (11), eine Schleuderbewegung (12) und ein Schleudern (13), wobei der stabile Fahrzustand (11) durch einen nahezu konstanten Schwimmwinkel ($\beta_0$), die Schleuderbewegung durch eine große Schwimmwinkeländerung und das Schleudern durch den Schwimmwinkel ($\beta_2$) größer als ein vorgegebener Schwellwert ($\beta_{min}$) **gekennzeichnet** sind.

3.  Vorrichtung nach Anspruch 1 oder 2, **dadurch gekennzeichnet, dass** die Sensorik (1) als die Fahrdynamikdaten eine Fahrzeuglängsgeschwindigkeit ($v_x$) und/oder eine Gierrate ($\omega_x$) und/oder eine Fahrzeugquerbeschleunigung ($a_y$) erfassen.

4.  Vorrichtung nach Anspruch 3, **dadurch gekennzeichnet, dass** die Sensorik (1) zusätzlich die Raddrehzahlen und/oder eine Fahrzeuglängsbeschleunigung ($a_x$) und/oder den Lenkwinkel und/oder eine Schätzung des Schwimmwinkels ($\beta_{ESP}$) ausgilbt.

5.  Vorrichtung nach einem der vorhergehenden Ansprüche, **dadurch gekennzeichnet, dass** die Vorrichtung mit einem Rückhaltesystem (3) verbindbar ist, das der Prozessor (2) in Abhängigkeit von der Erkennung des Überschlags ansteuert.

6.  Vorrichtung nach einem der vorhergehenden Ansprüche, **dadurch gekennzeichnet, dass** anstatt der Fahrzeugquergeschwindigkeit eine Fahrzeugschwerpunktsgeschwindigkeit verwendbar ist.

**Claims**

1.  Device for detecting vehicle rollover with the aid of a sensor system (1) for acquiring driving dynamics data and rollover data ($v_x$, $\omega_z$, $a_y$, $a_x$, $\omega_x$, $\beta_{ESP}$), it being possible to connect the sensor system (1) to a processor (2) which is configured in such a way that the processor (2) detects vehicle rollover as a function of the driving dynamics data and rollover data ($v_x$, $\omega_z$, $a_y$, $a_x$, $\omega_x$, $\beta_{ESP}$), **characterized in that** the processor (2) has means for dividing a driving condition of the vehicle into temporally successive phases (11 to 13), the processor (2) having for each phase means for determining an attitude angle and a transverse vehicle speed from the driving dynamics data and rollover data ($v_x$, $\omega_z$, $a_y$, $a_x$, $\omega_x$, $\beta_{ESP}$), the detection of the vehicle rollover being performed as a function of the attitude angle ($\beta_0$, $\beta_1$, $\beta_2$) and the transverse vehicle speed ($v_{y0}$, $v_{y1}$, $v_{y2}$).

2.  Device according to Claim 1, **characterized in that** the means for dividing the driving condition are configured for distinguishing three phases: a stable driving condition (11), a swerving movement (12) and skidding (13), the stable driving condition (11) being **characterized by** a virtually constant attitude angle ($\beta_0$), the swerving movement being **characterized by** a large change in attitude angle, and skidding being **characterized by** an attitude angle ($\beta_2$) greater than a prescribed threshold value ($\beta_{min}$).

3.  Device according to Claim 1 or 2, **characterized in that** the sensor system (1) acquires as the driving dynamics data a longitudinal vehicle speed ($v_x$) and/or a yaw rate ($\omega_x$) and/or a transverse vehicle acceleration ($a_y$).

4.  Device according to Claim 3, **characterized in that** the sensor system (1) additionally outputs the wheel speeds and/or a longitudinal vehicle acceleration ($a_x$) and/or the steering angle and/or an estimate of the attitude angle ($\beta_{ESP}$).

5.  Device according to one of the preceding claims, **characterized in that** the device can be connected to a restraint system (3) which the processor (2) triggers as a function of the detection of the rollover.

6. Device according to one of the preceding claims, **characterized in that** it is possible to use a speed of the vehicle's centre of gravity instead of the transverse vehicle speed.

**Revendications**

1. Dispositif pour identifier un tonneau effectué par un véhicule avec un ensemble de capteurs (1) pour la détection de données dynamiques de roulage et de données de tonneau ($v_x$, $\omega_z$, $a_y$, $a_x$, $\beta_{ESP}$), dans lequel l'ensemble de capteurs (1) peut être raccordé à un processeur (2) configuré de façon qu'il identifie un tonneau effectué par le véhicule en fonction des données dynamiques de roulage et des données de tonneau ($v_x$, $\omega_z$, $a_y$, $a_x$, $\beta_{ESP}$), **caractérisé en ce que** le processeur (2) comprend des moyens pour diviser une situation de roulage du véhicule en phases se succédant dans le temps (11 à 13), le processeur (2) comprenant pour chaque phase des moyens pour déterminer un angle de dérapage et une vitesse transversale du véhicule à partir des données dynamiques de roulage et des données de tonneau ($v_x$, $\omega_z$, $a_y$, $a_x$, $\beta_{ESP}$), l'identification du tonneau effectué par le véhicule étant réalisée en fonction de l'angle de dérapage ($\beta_0$, $\beta_1$, $\beta_2$) et de la vitesse transversale du véhicule ($v_{y0}$, $v_{y1}$, $v_{y2}$).

2. Dispositif selon la revendication 1, **caractérisé en ce que** les moyens pour diviser la situation de roulage distinguent trois phases : une situation de roulage stable (11), un mouvement centrifuge (12) et un dérapage (13), la situation de roulage stable (11) étant **caractérisée par** un angle de dérapage ($\beta_0$) pratiquement constant, le mouvement centrifuge par une forte variation de l'angle de dérapage et le dérapage par un angle de dérapage ($\beta_2$) plus grand qu'une valeur de seuil prédéterminée ($\beta_{min}$).

3. Dispositif selon la revendication 1 ou 2, **caractérisé en ce que** l'ensemble de capteurs (1) détecte comme données dynamiques de roulage une vitesse longitudinale du véhicule ($v_x$) et/ou un degré de lacet ($\omega_x$) et/ou une accélération transversale du véhicule ($a_y$).

4. Dispositif selon la revendication 3, **caractérisé en ce que** l'ensemble de capteurs (1) émet également les vitesses de rotation des roues et/ou une accélération longitudinale du véhicule ($a_x$) et/ou l'angle de braquage et/ou une estimation de l'angle de dérapage ($\beta_{ESP}$).

5. Dispositif selon l'une quelconque des revendications précédentes, **caractérisé en ce que** le dispositif peut être raccordé à un système de retenue (3), que le processeur (2) commande en fonction de l'identification du tonneau.

6. Dispositif selon l'une quelconque des revendications précédentes, **caractérisé en ce qu'** une vitesse du centre de gravité du véhicule peut être utilisée au lieu de la vitesse transversale du véhicule.

Fig.1

Fig.2

Fig.3

EP 1 536 986 B1

Fig.4

Fig.5

Fig.6

Fig.7

Fig.8

Fig.9